# EUROPEAN PATENT APPLICATION

(11) **EP 4 600 567 A1**
(43) Date of publication of application: **13.08.2025**
(21) Application number: 24200684.9
(22) Date of filing: 17.09.2024
(51) Int. Cl.: F24F 1/0083, F24F 1/0358, F24F 3/14, F24F 1/0018, B01D 53/26

(54) **DEHUMIDIFIER**

(30) Priority: 07.02.2024 KR 20240018772
(71) Applicant: LG Electronics Inc., Yeongdeungpo-gu Seoul 07336 (KR)
(72) Inventor: PARK, Janghee, 08592 Seoul (KR); JEONG, Yongki, 08592 Seoul (KR); KIM, Kyungrock, 08592 Seoul (KR); LEE, Jinwoo, 08592 Seoul (KR); PARK, Taeju, 08592 Seoul (KR)
(74) Representative: Vossius & Partner Patentanwälte Rechtsanwälte mbB

(57) **Abstract**

The present disclosure relates to a dehumidifier.

A dehumidifier according to an embodiment of the present disclosure may include a main body including a suction part and a fan; a dehumidification module including a dehumidification member that separates moisture from the air suctioned from the suction part by driving the fan; a vacuum pump configured to provide driving force to discharge moisture separated from the dehumidification module to an outside of the dehumidification module; a valve device configured to supply at least some of the air discharged from the fan to the dehumidification module; and a supply pipe connected to the valve device and configured to supply air that has passed through the valve device to the dehumidification module.

## Description

### BACKGROUND

The present disclosure relates to a dehumidifier.

A dehumidifier is a type of home appliance that lowers the humidity in a desired space by suctioning in air from a desired space, removing moisture contained in the air, and discharging the dehumidified air to a desired space.

A conventional dehumidifier removes moisture by suctioning air from a desired space and passing the air through a heat exchanger consisting of a condenser and an evaporator, thereby exchanging heat between the refrigerant flowing through the condenser and the evaporator and the air passing through them.

The evaporator absorbs heat from the surrounding air by evaporating the liquid refrigerant, and the condenser releases heat by condensing the gaseous refrigerant and transfers the heat to the surrounding air. In other words, the air passing through the heat exchanger exchanges heat with the refrigerant while passing through the evaporator, thereby lowering the humidity, and the air with the lowered humidity passes through the condenser, exchanges heat with the refrigerant, and the drying process proceeds.

The dried air passing through the heat exchanger is discharged to a desired space, thereby lowering the humidity in the air in the desired space.

According to this conventional dehumidifier, there was a problem that the temperature of the discharged air increased, causing discomfort to the user.

### SUMMARY

An object of the present disclosure is to provide a dehumidifier that may implement constant temperature dehumidification without increasing the temperature of an indoor space by selectively separating moisture in the air through a dehumidification module including a membrane without operating a refrigeration cycle.

An object of the present disclosure is to provide a dehumidifier that may shorten the dehumidification time because dehumidification may be accomplished by passing through a dehumidification module without requiring time for stabilization of the refrigeration cycle.

An object of the present disclosure is to provide a dehumidifier that may easily separate and condense moisture by generating a first suction flow of air to remove moisture and a second suction flow of air to perform heat exchange.

An object of the present disclosure is to provide a dehumidifier equipped with a two-way suction fan so that the first suction flow and the second suction flow may be suctioned into the dehumidifier in directions facing each other.

An object of the present disclosure is to provide a dehumidifier in which moisture separation performance may be improved by being configured so that the first direction of the suction flow of air to remove moisture and the second direction of flow of separated water vapor are perpendicular to each other.

An object of the present disclosure is to provide a dehumidifier that may move water vapor in the air passing through the dehumidification module to the inside of the membrane by generating a pressure difference between the inside and outside of the membrane using a vacuum pump.

An object of the present disclosure is to provide a dehumidifier that facilitates the removal of condensed moisture by allowing water vapor separated from a dehumidification module to flow into a heat exchanger via a vacuum pump and exchange heat with indoor air in the heat exchanger.

An object of the present disclosure is to provide a dehumidifier in which the first part where the fan that generates air flow is disposed is disposed in the upper space of the dehumidifier, so that air may be easily suctioned into the indoor space.

An object of the present disclosure is to provide a dehumidifier in which a dehumidification module that separates moisture from the air is disposed in the first part, and the separated water vapor falls in the direction of gravity, making it easy to collect water vapor and forming a compact piping connected to a vacuum pump.

An object of the present disclosure is to provide a dehumidifier in which the main flow of indoor air requiring dehumidification and the sub-flow for the heat exchanger may easily occur in two directions using one fan by placing the heat exchanger in the first part.

An object of the present disclosure is to provide a dehumidifier that may facilitate the generation of a main flow in which a relatively large amount of suction is performed and a sub-flow in which a small amount of suction is performed and may prevent pressure loss by dividing the first part through a partition wall and disposing a dehumidification module and a heat exchanger in the divided area.

An object of the present disclosure is to provide a dehumidifier that may easily suction the separated water vapor into the vacuum pump by the gravitational effect by disposing a vacuum pump for suctioning water vapor separated from a dehumidification module in the second part and forming the second part as the lower space of the dehumidifier.

An object of the present disclosure is to provide a dehumidifier that quickly transfers high-temperature water vapor passing through the vacuum pump to the heat exchanger, is easy to block noise generated by the vacuum pump and is also effective for maintenance accessibility by disposing the vacuum pump in the second part below the heat exchanger.

An object of the present disclosure is to provide a dehumidifier that facilitates the flow of condensed water in the direction of gravity by disposing a drain tank for storing water condensed in a heat exchanger in the second part.

An object of the present disclosure is to provide a dehumidifier in which the upper space of the dehumidifier may be efficiently utilized and the user's accessibility to the water supply tank is improved by disposing the water supply tank that supplies water to the dehumidification module in the second part.

An object of the present disclosure is to provide a dehumidifier that prevents water vapor from accumulating on the inner wall of a dehumidification module.

An object of the present disclosure is to provide a dehumidifier that removes water vapor accumulated on the inner wall of the dehumidification module and prevents deterioration of dehumidification performance by supplying dry air to the inside of the dehumidification module.

An object of the present disclosure is to provide a dehumidifier that may uniformly supply a portion of the air discharged from a fan to the inside of a dehumidification module.

An object of the present disclosure is to provide a dehumidifier that may appropriately supply dry air to a dehumidification module according to indoor environmental conditions.

A dehumidifier according to an embodiment of the present disclosure may include a main body including a suction part and a fan; a dehumidification module including a dehumidification member that separates moisture from the air suctioned from the suction part by driving the fan; a vacuum pump configured to provide driving force to discharge moisture separated from the dehumidification module to an outside of the dehumidification module; a valve device configured to supply at least some of the air discharged from the fan to the dehumidification module; and a supply pipe connected to the valve device and configured to supply air that has passed through the valve device to the dehumidification module.

The dehumidifier may further include a partition wall configured to separate the space in which the dehumidification module is installed and the space in which the fan is installed.

The valve device may be installed on the partition wall.

The valve device and the supply pipe may be disposed in a space in which the dehumidification module is installed.

The dehumidifier may further include an inlet guide configured to guide at least some of the air discharged from the fan to the valve device.

The inlet guide may be installed on the partition wall.

The inlet guide may be disposed in a space where the fan is installed.

The inlet guide may be spaced apart and disposed above the fan.

The inlet guide and the valve device may be disposed across from each other with respect to the partition wall.

The valve device may include a valve housing forming an air flow path therein.

The valve device may further include a valve cover coupled to cover the open surface of the valve housing.

The valve device may further include an valve disposed in the air flow path to control the flow of air.

The valve device may further include a motor that provides driving force to rotate the valve.

The motor may be coupled to the valve cover.

The valve device may further include a valve support configured to support the valve.

The valve supports may be formed, respectively, on both sides of the valve housing to support both sides of the valve.

An inlet hole through which air flows in and an outlet hole through which air is discharged may be formed in the valve housing.

A guide hole partially penetrating may be formed in the partition wall.

The inlet hole may communicate with the guide hole.

The supply pipe may be connected to the outlet hole.

The front surface of the valve housing may be coupled to the valve cover.

The rear surface of the valve housing may be coupled to the partition wall.

The inlet hole may be formed in the front surface of the valve housing.

The outlet hole may be formed on the upper surface of the valve housing.

A portion of the valve may be opened to form a valve flow path through which air flows therein.

The valve flow path may be formed by penetrating from one side to the other side of the valve.

The dehumidification module may include a fixing part configured to fix the dehumidification member.

The dehumidification module may further include a cap configured to accommodate the fixing part and provided with a connection port in which air flows.

The dehumidification module may further include a distribution plate disposed inside the cap and configured to supply air introduced through the connection port to the dehumidification member.

A plurality of distribution holes is formed in the distribution plate to distribute air introduced into the connection port to the dehumidification member.

The dehumidifier may further include a controller configured to measure the humidity of the air discharged from the fan to compare the humidity with a reference humidity, and determine whether to open or close the valve device according to the comparison result.

### BRIEF DESCRIPTION OF THE DRAWINGS

FIG. 1 is a perspective view illustrating the outer appearance of a dehumidifier according to an embodiment of the present disclosure.
FIG. 2 is a rear perspective view illustrating the configuration of a dehumidifier according to an embodiment of the present disclosure.
FIG. 3 is a front perspective view illustrating the configuration of a dehumidifier according to an embodiment of the present disclosure.
FIG. 4 is a left side perspective view illustrating the configuration of a dehumidifier according to an embodiment of the present disclosure.
FIG. 5 is a right side perspective view illustrating the configuration of a dehumidifier according to an embodiment of the present disclosure.
FIG. 6 is an exploded perspective view illustrating a dehumidifier according to an embodiment of the present disclosure.
FIG. 7 is a cross-sectional view taken along line 7-7 in FIG. 1.
FIG. 8 is a top perspective view illustrating the configuration of a dehumidification module according to an embodiment of the present disclosure.
FIG. 9 is a lower perspective view illustrating the configuration of a dehumidification module according to an embodiment of the present disclosure.
FIG. 10 is an exploded perspective view illustrating a dehumidification module according to an embodiment of the present disclosure.
FIG. 11 is a cross-sectional view taken along line 11-11 in FIG. 8.
FIG. 12 is a view illustrating the configuration of a dehumidification member according to an embodiment of the present disclosure.
FIG. 13 is a top perspective view illustrating the configuration of the first part and the second part in the dehumidifier according to an embodiment of the present disclosure.
FIG. 14 is a view illustrating a state where a portion of the discharge flow of the fan according to an embodiment of the present disclosure flows into the inlet guide.
FIG. 15 is a front perspective view illustrating the configuration of a valve device according to an embodiment of the present disclosure.
FIG. 16 is a front perspective view illustrating the valve cover removed with the valve device in an open state according to an embodiment of the present disclosure.
FIG. 17 is a front perspective view illustrating the valve cover removed with the valve device in an closed state according to an embodiment of the present disclosure.
FIG. 18 is a cross-sectional view taken along line 18-18 of FIG. 14.
FIG. 19 is a view illustrating a state where the first suction flow and the second suction flow are suctioned and thus a discharge flow is generated in the dehumidifier according to an embodiment of the present disclosure.
FIG. 20 is a view illustrating a state where fluid is supplied from a water supply tank to a dehumidification module in a dehumidifier according to an embodiment of the present disclosure.
FIG. 21 is a flowchart illustrating a method for controlling a dehumidifier according to an embodiment of the present disclosure.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is illustrated by way of illustration specific preferred embodiments in which the disclosure may be practiced. These embodiments are described in sufficient detail to enable those skilled in the art to practice the disclosure, and it is understood that other embodiments may be utilized and that logical structural, mechanical, electrical, and chemical changes may be made without departing from the scope of the disclosure. To avoid detail not necessary to enable those skilled in the art to practice the disclosure, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present disclosure. Each of these terminologies is not used to define an essence, order or sequence of a corresponding component but used merely to distinguish the corresponding component from other components). It should be noted that if it is described in the specification that one component is "connected," "coupled" or "joined" to another component, the former may be directly "connected," "coupled," and "joined" to the latter or "connected", "coupled", and "joined" to the latter via another component.

In the specification or claims, the expression of "an element A includes or comprises at least one of a, b, and/or c" may mean (1) the element A includes or comprises "a", (2) the element A includes or comprises "b", (3) the element A includes or comprises "c", (4) the element A includes or comprises "a and b", (5) the element A includes or comprises "b and c", (6) the element A includes or comprises "a and c", and (7) the element A includes or comprises "a, b and c".

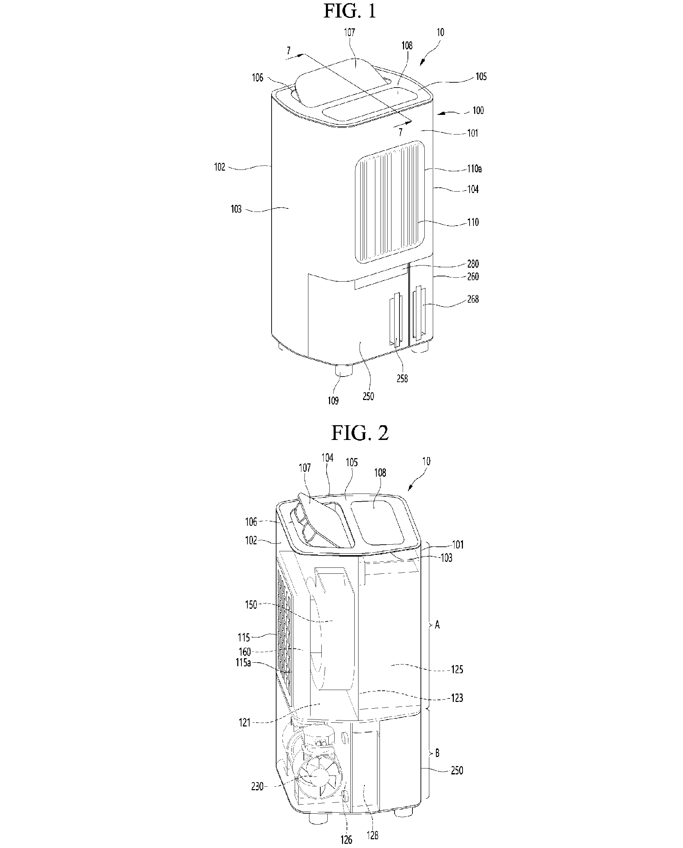

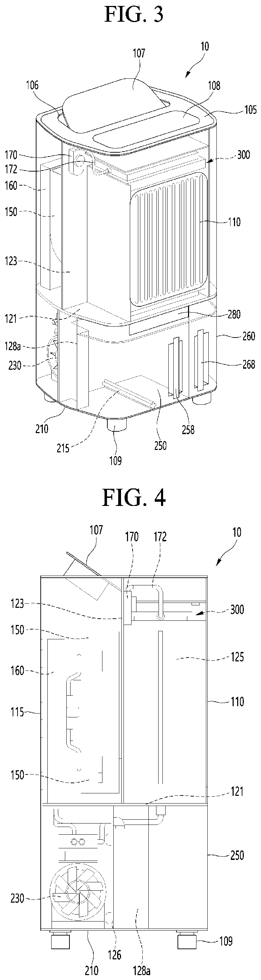

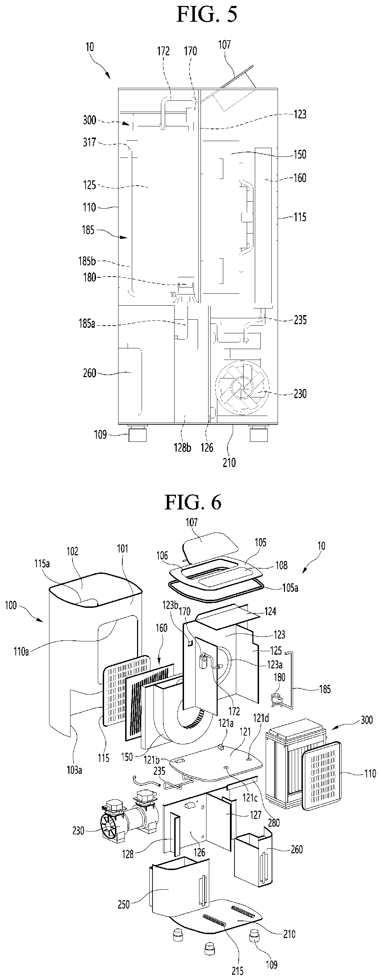

FIG. 1 is a perspective view illustrating the outer appearance of a dehumidifier according to an embodiment of the present disclosure, FIG. 2 is a rear perspective view illustrating the configuration of a dehumidifier according to an embodiment of the present disclosure, FIG. 3 is a front perspective view illustrating the configuration of a dehumidifier according to an embodiment of the present disclosure, FIG. 4 is a left side perspective view illustrating the configuration of a dehumidifier according to an embodiment of the present disclosure, and FIG. 5 is a right side perspective view illustrating the configuration of a dehumidifier according to an embodiment of the present disclosure.

Referring to FIGS. 1 to 5, the dehumidifier 10 according to an embodiment of the present disclosure may have a three-dimensional shape in which the height in the vertical direction is greater than the width in the front and rear direction.

Directions are defined. In FIG. 1, the surface on which the first suction part 110 is formed is defined as the front surface, the surface on which the second suction part 115 is formed in FIG. 2 is defined as the rear surface, and the surface on which the discharge part 106 is formed is defined as the upper surface.

The dehumidifier 10 may include a main body 100 that forms an outer appearance. The main body 100 may accommodate a number of components for suctioning air, removing moisture from the suctioned air, and discharging dehumidified air.

The main body 100 may include a front portion 101, a rear portion 102, a first side portion 103, a second side portion 104, an upper portion 105, and a lower portion. The lower portion may be defined by the base 210.

The front portion 101 may include a first suction part 110a that suctions air. A first suction grill 110 may be provided in the first suction part 1 10a. Air from an indoor space subject to dehumidification may be suctioned in through the first suction part 110a. The air flow suctioned from the first suction part 110a may be referred to as "first suction flow (first flow)" or "main flow."

The rear portion 102 may be disposed to face the front portion 101.

The rear portion 102 may include a second suction part 115a that suctions air. A second suction grill 115 may be provided in the second suction part 115a. Air from the indoor space to flow into the heat exchanger 160 may be suctioned in through the second suction part 115a. The air flow suctioned from the second suction part 115a may be referred to as "second suction flow (second flow)" or "sub flow."

The first side portion 103 connects one side of the front portion 101 and the rear portion 102 and may form one side of the dehumidifier.

The second side portion 104 connects the other side of the rear portion 102 of the front portion 101 and may form the other side of the dehumidifier. The second side portion 104 may be disposed to face the first side portion 103.

The upper portion 105 may form a discharge part 106 that discharges air from the dehumidifier 10. The discharge part 106 may be provided with a discharge vane 107 that controls opening or closing of the discharge part 106.

The upper portion 105 may include a display part 108 that outputs operation information of the dehumidifier 10. The display part 108 may be provided with an input part for inputting operation commands.

The display part 108 is disposed at a location adjacent to the front portion 101 of the upper surface portion 105, and the discharge part 106 may be formed at a location adjacent to the rear portion 102 of the upper portion 105.

When a user approaches the dehumidifier 10, the user may easily operate the display part 108 by approaching the front portion 101 in a direction closer to the front portion 101. In addition, since the tanks 250 and 260 provided in the dehumidifier 10 are detachably provided on the front portion 101, user accessibility and convenience of operation may be improved.

Tanks 250 and 260 for storing water may be provided at the lower part of the dehumidifier 10 so that they may be mounted or detached.

The tanks 250 and 260 may include a drain tank 250 in which condensed water is stored after water vapor separated from the dehumidification module 300 is condensed in the heat exchanger 160. The drain tank 250 may include a first handle 258 that the user may hold.

The tanks 250 and 260 may include a water supply tank 260 that stores water to be supplied to the dehumidification module 300 in order to improve the moisture separation characteristics of the dehumidification module 300. The water supply tank 260 may include a second handle 268 that the user may hold.

The dehumidifier 10 may further include an auxiliary display part 280 that provides information regarding whether the tanks 250 and 260 are mounted. The auxiliary display part 280 may be provided in the front portion of the first partition wall 121. The auxiliary display part 280 may provide a notification regarding emptying or supplying water to the tanks 250 and 260, based on the water levels of the tanks 250 and 260.

When the tanks 250 and 260 are mounted, the auxiliary display part 280 may be provided at a location shielded by the tanks 250 and 260. For example, the tanks 250 and 260 are made of a transparent material, so even if the tanks 250 and 260 are mounted, the information output from the auxiliary display part 280 can be visible from the outside.

A base 210 is provided on the lower portion the dehumidifier 10, and the base 210 may function as a support plate that forms the machine room of the dehumidifier 10. A plurality of legs 109 placed on the ground may be provided on the lower side of the base 210.

The dehumidifier 10 may include a first part A forming an upper portion and a second part B forming a lower portion. The first part A may be referred to as an "upper part" and the second part B may be referred to as a "lower part."

Inside the main body 100, a first partition wall 121 that divides a first space (upper space) where the components constituting the first part A are installed and a second space (lower space) where the components constituting the second part B are installed may be provided.

Components constituting the first part A may include a dehumidification module 300, a fan 150, and a heat exchanger 160.

The components constituting the first part A may further include a valve device 170 and a supply pipe 172 that supply at least some of the air discharged from the fan 150 to the dehumidification module 300.

Components constituting the second part B may include a vacuum pump 230 and tanks 250 and 260. The tanks 250 and 260 may include a drain tank 250 and a water supply tank 260.

The vacuum pump 230 may be aligned below the fan 150 and the heat exchanger 160, and the tanks 250 and 260 may be aligned below the dehumidification module 300.

The components constituting the first part A or the second part B may be connected to the water supply tank 260 and include a water pump 180 and a water supply connection pipe 185.

The dehumidification module 300 may be installed on the upper surface of the first partition wall 121.

The dehumidification module 300 may be disposed inside the first suction part 110a. Accordingly, the dehumidification module 300 may be disposed so that air flowing into the first part A through the first suction part 110a passes.

The first part A may further include a second partition wall 123 that divides the installation space of the dehumidification module 300 and the installation space of the fan 150. The second partition wall 123 allows the first suction flow to pass through the dehumidification module 300 in the first suction part 110a and the second suction flow to pass through the heat exchanger 160 in the second suction part 115a to be separated from each other.

The flow rate of the first suction flow and the flow rate of the second suction flow may be formed differently. Since the first suction flow and the second suction flow are separated by the second partition wall 123, it is possible to prevent flow loss from occurring due to a pressure difference between the mutual flows.

The flow rate of the first suction flow may be greater than the second suction flow rate. For example, the flow rate of the second suction flow may be formed at a level of 60% of the flow rate of the first suction flow rate. For example, the first suction flow rate may be generated by about 170 CMH and the second suction flow rate may be generated by about 100 CMH.

The first suction flow is a flow of air to be dehumidified and requires a large amount, but the second suction flow may require a relatively small amount to condense moisture in the heat exchanger 160.

The fan 150 may be controlled so that the suction flow rate of the first suction side where the first suction flow is suctioned is greater than the second suction side where the second suction flow is suctioned.

The dehumidification module 300 may be disposed in the space between the second partition wall 123 and the first suction part 110a. The space between the second partition wall 123 and the first suction part 110a may be referred to as a "dehumidification module space part."

The fan 150 and the heat exchanger 160 may be disposed in the space between the second partition wall 123 and the second suction part 115a. The space between the second partition wall 123 and the second suction part 115a may be referred to as a "fan space part" or "heat exchanger space part."

The air suctioned through the first suction part 110a may be separated from moisture after passing through the dehumidification module 300. The moisture-separated air may be suctioned into the suction side of the fan 150 after passing through the second partition wall 123.

The fan 150 may include a bidirectional suction fan that suctions and discharges air from both directions. For example, the fan 150 may include a two-way centrifugal fan that suctions air in axial directions on both sides and discharges the air in radial directions.

The suction side of the fan 150, where the air passing through the dehumidification module 300 is suctioned, may be referred to as the "first suction side." In other words, the first suction flow may be understood as an air flow flowing from the first suction part 110a to the first suction side of the fan 150.

The dehumidification module 300 may be detachably mounted inside the main body 100.

The dehumidifier 10 may further include a module mounting guide 125 that guides the mounting of the dehumidification module 300. The module mounting guide 125 may form a portion of the first part A.

The module mounting guide 125 is provided inside the main body 100 and may be connected to the second partition wall 123. The module mounting guide 125 may extend from the second partition wall 123 toward the first suction part 110a.

A plurality of module mounting guides 125 are provided, and the plurality of module mounting guides 125 may be spaced apart from each other. The dehumidification module 300 may be mounted in the space between the plurality of module mounting guides 125.

The plurality of module mounting guides 125 may be disposed adjacent to or in contact with both sides of the dehumidification module 300.

The heat exchanger 160 may be disposed inside the second suction part 115a. Accordingly, the heat exchanger 160 may be disposed so that air flowing into the first part A through the second suction part 115a passes.

The heat exchanger 160 may be disposed between the second suction part 115a and the fan 150. Accordingly, the air suctioned through the second suction part 115a may pass through the heat exchanger 160 and then be suctioned into the suction side of the fan 150. At this time, the air may condense the water vapor while exchanging heat with the water vapor separated from the dehumidification module 300.

The suction side of the fan 150, where the air passing through the heat exchanger 160 is suctioned, may be referred to as the "second suction side." In other words, the second suction flow may be understood as an air flow flowing from the second suction part 115a to the second suction side of the fan 150.

The first suction flow and the second suction flow are suctioned in the axial direction of the fan 150 and discharged in the radial direction, and then may be discharged through the discharge part 106 provided on the upper portion 105 of the dehumidifier 10.

The second part B may be provided on the lower side of the first partition wall 121.

The second part B may further include a third partition wall 126 that divides the installation space of the vacuum pump 230 and the installation space of the tanks 250 and 260. The third partition wall 126 may partition the installation space of the vacuum pump 230 and the installation space of the tanks 250 and 260 in the front and rear direction.

By the third partition wall 126, the noise generated by the vacuum pump 230 may be prevented from being transmitted to the front side of the dehumidifier 10, that is, to the installation space of the tanks 250 and 260 that users often access.

The third partition wall 126 can easily provide an installation area for sensors 256 and 266 for detecting mounting of the tanks 250 and 260 and a delivery path for condensate to be delivered to the drain tank 250.

The third partition wall 126 is connected to the base 210 forming the lower portion of the dehumidifier 10 and may be configured to protrude upward from the base 210.

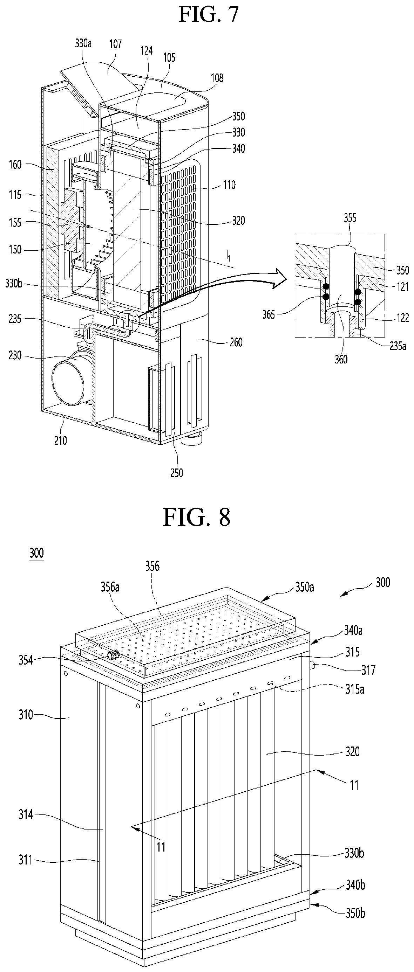

The second part B may further include a fourth partition wall 127 (see FIG. 8) that divides the installation space of the tanks 250, 260 into the installation space of the drain tank 250 and the installation space of the water supply tank 260. The fourth partition wall 127 may divide the installation space of the drain tank 250 and the installation space of the water supply tank 260 in the left and right direction.

The tanks 250 and 260 may be detachably mounted on the dehumidifier 10.

The second part B may include a tank mounting guide 128 provided on both left and right sides of the base 210 to guide the mounting of the tanks 250 and 260.

The tank mounting guide 128 may include a first mounting guide 128a that guides the mounting of the drain tank 250. The first mounting guide 128a is connected to the base 210 and may be configured to protrude upward from the base 210.

The drain tank 250 may be detachably mounted in the space between the fourth partition wall 127 and the first mounting guide 128a. The first mounting guide 128a may be disposed adjacent to or in contact with one side of the drain tank 250.

The tank mounting guide 128 may include a second mounting guide 128b that guides the mounting of the water supply tank 260. The second mounting guide 128b is connected to the base 210 and may be configured to protrude upward from the base 210.

The water supply tank 260 may be detachably mounted in the space between the fourth partition wall 127 and the second mounting guide 128b. The second mounting guide 128b may be disposed adjacent to or in contact with one side of the water supply tank 260.

The base 210 may include a rail 215 that guides the mounting of the tanks 250 and 260. The rail 215 protrudes from the base 210 and may be configured to extend in the direction in which the tanks 250 and 260 are mounted, that is, in the front and rear direction. The rail 215 may be provided on the lower side of the drain tank 250 and the lower side of the water supply tank 260, respectively.

The plurality of rails 215 may be inserted into the rail groove formed on the lower surface of the drain tank 250 and the rail groove formed on the lower surface of the water supply tank 260.

The dehumidifier 10 may include air supply devices 170 and 172 that supply air to the dehumidification module 300 in order to improve the dehumidification performance of the dehumidification module 300. The air supply devices 170 and 172 may be configured to supply at least some of the air discharged from the fan 150 to the dehumidification module 300.

The air supply devices 170 and 172 may include a valve device 170 disposed on the discharge side of the fan 150. For example, the valve device 170 may be disposed on the second partition wall 123. In particular, the valve device 170 may be disposed at a position adjacent to the upper end of the second partition wall 123 adjacent to the discharge side of the fan 150.

At least some of the air discharged from the fan 150 may flow into the valve device 170 through the guide hole. The guide hole may be formed in the second partition wall 123.

The valve device 170 may be installed in the guide hole.

The air supply devices 170 and 172 are connected to the valve device 170 and may further include a supply pipe 172 that supplies air that has passed through the valve device 170 to the dehumidification module 300. The supply pipe 172 may be connected to the connection port of the dehumidification module 300.

The dehumidifier 10 may include a connection pipe 235 through which water vapor separated from the dehumidification module 300 flows and a vacuum pump 230 connected to the connection pipe 235. The connection pipe 235 may be referred to as a "water vapor connection pipe."

The connection pipe 235 includes a first connection pipe which is connected to the dehumidification module 300 and connected to the suction side of the vacuum pump 230, and the separated water vapor from the dehumidification module 300 may be suctioned into the vacuum pump 230 through the first connection pipe.

The first connection pipe extends from the lower surface of the first partition wall 121, and the first partition wall 121 may have a port communication hole 121c (see FIG. 6) connected to the dehumidification module 300.

The connection pipe 235 is connected to the discharge side of the vacuum pump 230 and includes a second connection pipe connected to the heat exchanger 160, and high-temperature water vapor discharged from the vacuum pump 230 may flow into the heat exchanger 160 through the second connection pipe.

The water vapor passing through the vacuum pump 230 may be compressed by the vacuum pump 230 and have a high temperature state, for example, temperature of about 45 to 50°C.

The water vapor passing through the vacuum pump 230 may form a flow rate of less than about 5% of the total suction flow rate of the system, that is, the flow rate suctioned through the first suction part 110a. Therefore, the water vapor may be sufficiently converted into condensate by exchanging heat with the air suctioned through the second suction part 115a.

The second connection pipe may be connected to the inlet port 121a (see FIG. 6) of the first partition wall 121. The inlet port 121a may be coupled to the inlet part 166a of the heat exchanger 160.

The heat exchanger 160 may be configured to exchange heat between the air suctioned in from the second suction part 115a and the water vapor flowing through the second connection pipe. For example, the second connection pipe may be connected to the lower end portion of the heat exchanger 160.

The dehumidifier 10 further includes a condensate pipe 236 through which water condensed in the heat exchanger 160 flows, and the condensate pipe 236 may be connected to the discharge side of the heat exchanger 160. For example, the condensate pipe 236 may be connected to the lower end portion of the heat exchanger 160.

The condensate pipe 236 is connected to the discharge port 121b (see FIG. 6) of the first partition wall 121 and may extend from the lower surface of the first partition wall 121.

The condensate pipe 236 is provided in the second part B and may be disposed to communicate with a space where the drain tank 260 is mounted.

The dehumidifier 10 is fluidly connected to the water tank 260 and may further include a water pump 180 that provides driving force to supply water from the water supply tank 260 to the dehumidification module 300.

For example, the water pump 180 is disposed in the first part A and may be seated on the upper side of the first partition wall 121. However, it is not limited to this, and the water pump 180 may be placed in the second part B.

The dehumidifier 10 is connected to the water pump 180 and may further include a water supply connection pipe 185 that delivers water from the water supply tank 260 to the dehumidification module 300.

The water supply connection pipe 185 is connected to the tank duct 263 of the water supply tank 260 and may include a first connection pipe 185a that delivers water from the water supply tank 260 to the water pump 180. The first connection pipe 185a may pass through the first partition wall 121 and be connected to the water pump 180.

The first partition wall 121 may include a water supply through-hole 121d (see FIG. 6) through which the first connection pipe 185a passes.

The water supply connection pipe 185 is connected to the water supply pump 180 and may include a second connection pipe 185b extending to the dehumidification module 300. The second connection pipe 185b may be connected to the water supply port of the dehumidification module 300.

FIG. 6 is an exploded perspective view illustrating a dehumidifier according to an embodiment of the present disclosure, and FIG. 7 is a cross-sectional view taken along line 7-7 in FIG. 1.

Referring to FIG. 6, the dehumidifier 10 according to an embodiment of the present disclosure may include a main body 100 that accommodates a plurality of components for dehumidifying air.

The main body 100 may include a front portion 101, a rear portion 102, two side portions 103 and 104, and an upper portion 105.

The upper portion 105 may consist of a detachable plate. The upper portion 105 may be coupled to the open upper end portion of the main body 100.

The upper portion 105 may include a discharge part 106 that discharges air, a discharge vane 107 that opens and closes the discharge part 106, and a display part 108.

A sealing member 105a may be provided between the open upper end portion of the main body 100 and the upper portion 105 to prevent air leakage.

The main body 100 may include a first suction part 110a through which the first suction flow is suctioned. The first suction part 110a is formed by penetrating at least a portion of the front portion 101, and a first suction grill 110 may be mounted on the first suction part 110a.

The main body 100 may include a second suction part 115a through which the second suction flow is suctioned. The second suction part 115a is formed by penetrating at least a portion of the rear portion 102, and a second suction grill 115 may be mounted on the second suction part 115a.

Between the first suction part 110a and the second suction part 115a, a dehumidification module 300, a fan 150, and heat exchanger 160 may be disposed in sequence in the direction from the first suction part 110a toward the second suction part 115a.

The first partition wall 121 that divides the dehumidifier 10 into the first part A and the second part B may be formed with communication parts 121a, 121b, and 121c through which water vapor or condensate passes. The communication parts 121a, 121b, and 121c may include a port communication hole 121c that guides the water vapor separated from the dehumidification module 300 to flow to the vacuum pump 230.

The communication parts 121a, 121b, and 121c may include an inlet port 121a that guides high-temperature water vapor passing through the vacuum pump 230 to flow into the heat exchanger 160.

The communication parts 121a, 121b, and 121c may include a discharge port 121b that guides the condensed water condensed in the heat exchanger 160 to flow into the drain tank 250.

The dehumidifier 10 may include a second partition wall 123 which extends upward from the first partition wall 121 and divides
the internal space of the first part A into a space where the dehumidification module 300 is located and a space where the fan 150, and a heat exchanger are located.

The second partition wall 123 may have a fan suction part 123a which is formed on the outlet side of the dehumidification module 300 based on the first suction flow and guides the air passing through the dehumidification module 300 to the suction side of the fan 150.

The fan suction part 123a may include a round suction guide (bell mouth) so that air may be smoothly suctioned in the axial direction of the fan 150.

The dehumidifier 10 may include two module mounting guides 125 that protrude from the second partition wall 123 and guide the mounting of the dehumidification module 300. The module mounting guide 125 may protrude from the second partition wall 123 in a direction toward the first suction part 110a.

The two module mounting guides 125 may be disposed on both sides of the fan suction part 123a. The front and rear width of the dehumidification module 300 supported by the two module mounting guides 125 may be larger than the diameter of the fan suction part 123a. Accordingly, the dehumidification module 300 may cover the fan suction part 123a.

The first suction flow passes through the second partition wall 123 through the fan suction part 123a and may be suctioned into the first suction side of the fan 150.

The second suction flow suctioned through the second suction part 115a may pass through the heat exchanger 160 and then be suctioned into the second suction side of the fan 150.

The dehumidifier 10 may further include a plate 124 coupled to the second partition wall 123. For example, the plate 124 is coupled to the upper end portion of the second partition wall 123 and may protrude in a direction toward the front portion 101.

The plate 124 may be disposed to partition the space between the upper portion 105 and the upper end of the dehumidification module 300. By driving the vacuum pump 230, vacuum pressure is applied to the dehumidification module 300, and the plate 124 may block the vacuum pressure from acting on the upper portion 105.

The main body 100 may include an opening to form an inlet space in which the tanks 250 and 260 are mounted. The opening is formed from the front portion 101 to both side portions 103 and 104 and may be configured to be open in the direction in which the tanks 250 and 260 are pulled in or out.

Referring to FIG. 7, the first part A may include a fan motor 155 for driving the fan 150. The fan motor 155 may be coupled to the central hub of the fan 150. The shaft of the fan motor 155 may be coupled to the hub 151 in the axial direction (front and rear direction).

The center line ℓ1 passing through the center of the fan motor 155 in the front and rear direction may pass through the dehumidification module 300, the fan suction part 123a, and the heat exchanger 160. For example, the center line ℓ1 may pass through the center of the dehumidification module 300, the center of the fan suction part 123a, and the center of the heat exchanger 160.

The dehumidification module 300 may be seated on the first partition wall 121.

The dehumidification module 300 may include a dehumidification member 320 that selectively separates moisture.

The dehumidification module 300 may further include a fixing part 330 supporting an end portion of the dehumidification member 320 and a first cap 340 in which the fixing part 330 is filled.

The dehumidification module 300 may further include a second cap 350 that covers the first cap 340.

The fixing part 330, the first cap 340, and the second cap 350 may be provided on both sides of the dehumidification member 320, respectively. In other words, the fixing part 330, the first cap 340, and the second cap 350 may be provided on the upper and lower sides of the dehumidification member 320, respectively.

The lower surface of the dehumidification module 300 may be coupled to the first partition wall 121.

The dehumidification module 300 may include a connection port 360 protruding from the second cap 350 in a direction toward the first partition wall 121. The connection port 360 may be coupled to the protrusion 122 of the first partition wall 121. The protrusion 122 may protrude downward from the lower surface of the first partition wall 121.

For example, the connection port 360 may be inserted into the protrusion 122.

A sealing member 365 may be provided on the outer peripheral surface of the connection port 360 to seal the space between the protrusion 122 and the connection port 360. By the sealing member 365, the connection port 360 and the protrusion 122 may be firmly coupled.

A plurality of sealing members 365 may be provided.

A cap hole 355 is formed in the second cap 350, and the cap hole 355 may extend to the connection port 360. Moisture (water vapor) separated from the dehumidification module 300 may be discharged to the outside of the dehumidification module 300 through the cap hole 355.

A connector 235 that guides the flow of water vapor, that is, a first connector, may be coupled to the protrusion 122. The first connection pipe may extend from the protrusion 122 to the vacuum pump 230 and be connected to the vacuum pump 230.

The first connection pipe may communicate with the connection port 360 inside the protrusion 122.

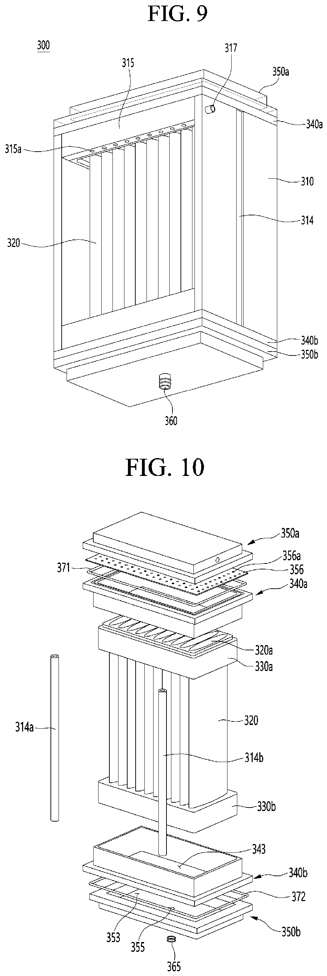

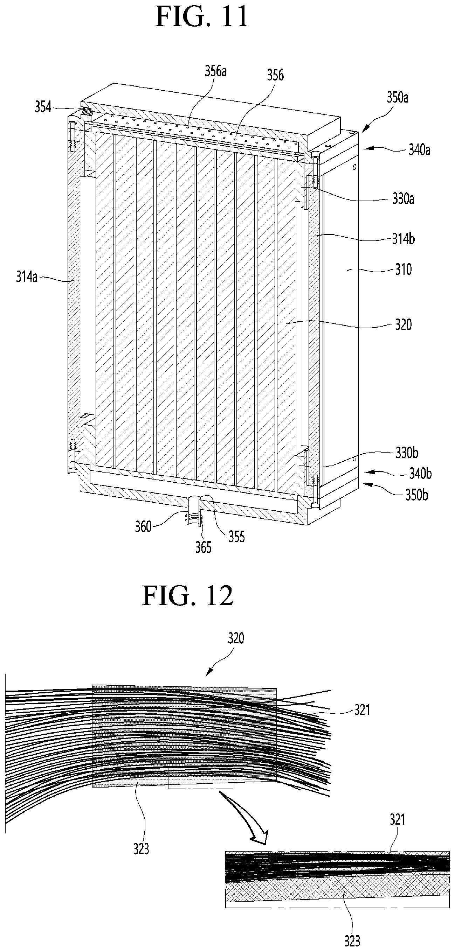

FIG. 8 is a top perspective view illustrating the configuration of a dehumidification module according to an embodiment of the present disclosure, FIG. 9 is a lower perspective view illustrating the configuration of a dehumidification module according to an embodiment of the present disclosure, FIG. 10 is an exploded perspective view illustrating a dehumidification module according to an embodiment of the present disclosure, FIG. 11 is a cross-sectional view taken along line 11-11 in FIG. 8, and FIG. 12 is a view illustrating the configuration of a dehumidification member according to an embodiment of the present disclosure.

Referring to FIGS. 7, 8 to 12 together, the dehumidification module 300 according to an embodiment of the present disclosure may be detachably mounted on the dehumidifier 10.

The dehumidification module 300 may include a dehumidification member 320 capable of selectively separating moisture from the suctioned air.

The dehumidification member 320 may include a membrane.

In detail, the dehumidification member 320 may include polymer membrane fibers 321 having a hollow fiber structure with excellent selectivity for moisture. The polymer membrane fiber 321 may be cut to a predetermined length and used. The polymer membrane fiber 321 may be referred to as a "hollow fiber membrane."

For example, the polymer membrane fiber 321 may be configured to have a diameter of about 400 to 420 µm.

The polymer membrane fiber 321 may be provided in multiple strands.

The dehumidification member 320 may further include a packing member 323 surrounding the plurality of polymer membrane fibers 321 to fix the polymer membrane fibers 321 composed of multiple strands.

By the packing member 323, the plurality of polymer membrane fibers 321 may form a bundle. The bundle of dehumidification members 320 may constitute a single dehumidification member.

The packing member 323 is made of a resin material and has strong resistance to water and may inhibit bacterial growth or mold growth. In addition, the packing member 323 may perform the function of protecting the dehumidification member 321 by blocking large dust in the air. For example, the packing member 323 may be made of polypropylene.

The dehumidification module 300 may be configured to provide a plurality of such dehumidification members 320. For example, as illustrated in FIG. 8, the dehumidification module 300 may be configured to have about 10 dehumidification members 320 disposed side by side.

The dehumidification module 300 may further include fixing parts 330a and 330b configured by a potting method to fix the dehumidification member 320. The fixing parts 330a and 330b may be formed by filling and solidifying the inside of the first caps 340a and 340b in a liquid form to fix the positions of the plurality of dehumidification members 320.

For example, the fixing parts 330a and 330b may be made of urethane or epoxy material.

The fixing parts 330a and 330b may include a first fixing part 330a for fixing one end portion of the dehumidification member 320 and a second fixing part 330b for fixing the other end portion thereof.

The first caps 340a and 340b may be referred to as "potting caps."

The first fixing part 330a may be disposed inside the upper end cap 340a provided on the upper side of the dehumidification member 320 among the first caps 340a and 340b. The second fixing part 330b may be disposed inside the lower end cap 340b provided on the lower side of the dehumidification member 320 among the first caps 340a and 340b.

A potting space 343 may be formed inside the first caps 340a and 340b so that the fixing parts 330a and 330b may be disposed.

The end portion 320a of the dehumidification member 320 fixed by the fixing parts 330a and 330b may be exposed to the outside of the fixing parts 330a and 330b.

The dehumidification module 300 may further include second caps 350a and 350b that cover the first caps 340a and 340b. The second caps 350a and 350b may be referred to as "end caps."

The second caps 350a and 350b may include a first end cap 350a that covers the upper end cap 340a and a second end cap 350b that covers the lower end cap 340b.

The first end cap 350a may be provided with a connection port 354 through which at least some of the air discharged from the fan 150 flows. Air that has passed through the valve device 170 and the supply pipe 172 may flow into the interior of the first end cap 350a through the connection port 354.

The dehumidification module 300 may further include a distribution plate 356 provided inside the first end cap 350a. The distribution plate 356 may be supported on the end portion of the upper end cap 340a and shielded by the first end cap 350a.

The connection port 354 may communicate with a space (distribution space) between the distribution plate 356 and the upper surface of the first end cap 350a. Accordingly, air may flow into the distribution space through the connection port 354 and flow toward the distribution plate 356.

A plurality of distribution holes 356a through which air flows may be formed in the distribution plate 356. The plurality of distribution holes 356a serve to guide air introduced through the connection port 354 to the space where the dehumidification member 320 is located. The plurality of distribution holes 356a may be formed by penetrating downward from the upper surface of the distribution plate 356. The plurality of distribution holes 356a may be formed as microscopic holes.

The plurality of distribution holes 356a may be formed entirely on the upper surface of the distribution plate 356. The plurality of distribution holes 356a may be disposed at equal intervals on the upper surface of the distribution plate 356. For example, the plurality of distribution holes 356a may be arranged in a lattice structure.

Air flows toward the end portion 320a of the dehumidification member 320 through the plurality of distribution holes 356a and may flow toward the inner peripheral surface forming the hollow portion of the dehumidification member 320.

Due to the pressure difference between the inside and outside of the dehumidification member 320, water vapor may accumulate on the inner wall of the dehumidification member 320 when the water vapor passes through the dehumidification member 320. Such water vapor may deteriorate the dehumidification performance of the dehumidification member 320.

In order to solve this problem, at least some of the air discharged from the fan 150 is bypassed to pass through the distribution hole 356a and supplied to the dehumidification member 320 to remove water vapor accumulated on the inner wall.

Since the plurality of distribution holes 356a have a fine diameter and are spaced at even intervals, the air introduced through the connection port 354 may pass through the interior of the dehumidification member 320 in a uniform flow through the plurality of distribution holes 356a. Accordingly, water vapor accumulated on the inner wall of the dehumidification member 320 may be quickly removed.

Air may be supplied intermittently through the distribution hole 356a.

A recessed part 353 may be formed in the second caps 350a and 350b. The recessed part 353 may form a space between the end portion 320a of the dehumidification member 320 and the end surfaces of the second caps 350a and 350b.

The recessed part 353 of the first end cap 350a forms a space between the distribution plate 356 and the upper end surface of the first end cap 350a, and thus the flow path of air flowing into the distribution hole 356a may be formed.

The recessed part 353 of the second end cap 350b may form a flow path through which moisture (water vapor) separated from the dehumidification member 320 flows into the cap hole 355.

The dehumidification module 300 may further include a support 314 to reinforce the one-way supporting force of the dehumidification member 320. For example, the support 314 may reinforce the vertical support of the dehumidification member 320.

Since the dehumidification member 320 is formed to be relatively long in the vertical direction, the support 314 can provide the supporting force in the vertical direction.

The support 314 may extend between the upper end cap 340a and the lower end cap 340b. One end portion of the support 314 may be connected to the upper end cap 340a and the other end portion may be connected to the lower end cap 340b.

For example, the support 314 may have the shape of a bar.

A plurality of supports 314 are provided, and the plurality of supports 314 may include a first support 314a provided on one side of the upper end cap 340a and the lower end cap 340b, and a second support 314b provided on the other side thereof.

The dehumidification module 300 may include a housing 310 disposed to surround at least a portion of the dehumidification member 320. The housing 310 may include parts that cover both sides of the plurality of dehumidification members 320 and parts that cover a portion of the upper end portion and a portion of the lower end portion of the plurality of dehumidification members 320.

The housing 310 may function as a member that blocks the open space around the dehumidification members 320 to prevent air from leaking (loss) into the space surrounding the plurality of dehumidification members 320 and the support 314.

A coupling hole 311 to which the support 314 is coupled may be formed in the housing 310.

The housing 310 may include a water supply duct 315 for supplying water to the dehumidification member 320. The water supply duct 315 may be provided in a part that covers a portion of the upper end portion of the plurality of dehumidification members 320.

Water supplied from the water supply pump 180 may flow through the water supply duct 315. A water supply hole 315a may be formed on the lower surface of the water supply duct 315 to supply water to the dehumidification member 320.

A plurality of water supply holes 315a are formed, and the plurality of water supply holes 315a may be arranged in the direction in which the plurality of dehumidification members 320 are arranged, that is, in the left and right direction based on FIG. 1.

The water supply hole 315a may be located on the upper front side of the dehumidification member 320. Even if water is sprayed toward the front of the dehumidification member 320 through the water supply hole 315a, the water may be in contact with the dehumidification member 320 due to the suction force of the fan 150.

Water may be supplied intermittently through the water supply hole 315a.

The housing 310 may include a water supply port 317 connected to the water supply connection pipe 185, that is, the second connection pipe 185b. The water supply port 317 may be connected to the water supply duct 315. For example, the water supply port 317 may pass through the housing 310 and be connected to the side of the water supply duct 315.

Water pumped from the water pump 180 may flow into the water supply port 317 through the second connection pipe 185b and flow into the water supply duct 315.

When the dehumidifier 10 is operated in an environment where absolute humidity is very low, the moisture separation performance of the dehumidification member 320 may be weakened. Therefore, in order to improve the moisture separation performance, water can be supplied to the dehumidification member 320 (improvement of wettability of the dehumidification member).

In order to form such a water supply flow path, the present embodiment may provide the water pump 180, connection pipe 185, and water supply duct 315.

The dehumidification module 300 may further include sealers 371 and 372 for sealing the space between the first caps 340a and 340b and the second caps 350a and 350b.

The sealers 371 and 372 may include a first sealer 371 provided between the upper end cap 340a and the first end cap 350a. The first sealer 371 may be in contact with the upper end cap 340a and the first end cap 350a.

The sealers 371 and 372 may include a second sealer 372 provided between the lower end cap 340b and the second end cap 350b. The second sealer 372 may be in contact with the lower end cap 340b and the second end cap 350b.

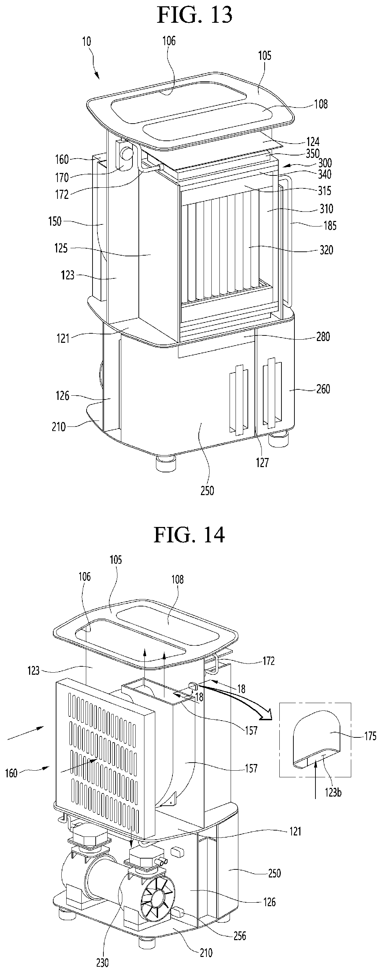

FIG. 13 is a top perspective view illustrating the configuration of the first part and the second part in the dehumidifier according to an embodiment of the present disclosure, and FIG. 14 is a view illustrating a state where a portion of the discharge flow of the fan according to an embodiment of the present disclosure flows into the inlet guide.

Referring to FIGS. 13 and 14, in the dehumidifier 10 according to an embodiment of the present disclosure, a first suction flow may be generated as the main flow of air to be dehumidified by driving the fan 150.

When the fan 150 is driven, air can be suctioned in through the first suction part 110a in a direction crossing the front portion 101, for example, a direction perpendicular to the front portion 101.

The air suctioned in from the first suction part 110a may pass in the direction in which the plurality of dehumidification members 320 extend, that is, in the direction (front and rear direction) that intersects the vertical directions.

By driving the vacuum pump 230, by a pressure difference generated between the outside and inside of the dehumidification member 320, a negative pressure lower than the external pressure may be formed inside the dehumidification member 320.

In the process of air passing through the dehumidification member 320, moisture contained in the air may contact the surface of the dehumidification member 320 and be adsorbed. In addition, the adsorbed moisture may be selectively separated from the air by diffusing and then desorbing from the surface.

The separated moisture flows downward inside the dehumidification member 320 and may flow into the cap hole 355 of the second end cap 350b. In other words, the flow direction (downward) of the separated moisture may form a direction perpendicular to the flow direction (front and rear direction) of the air.

The air from which the moisture has been separated may be suctioned in the axial direction of the fan 150. At this time, the air that has passed through the dehumidification module 300 may be suctioned into the hub 151 of the fan 150 through the fan suction part 123a of the second partition wall 123. A fan motor 155 may be coupled to the hub 151.

The fan 150 may include a plurality of blades arranged in the peripheral direction of the hub 151. By rotating the plurality of blades, air suctioned in the axial direction (front and rear direction) of the fan 150 may be discharged in the radial direction of the fan 150.

The air discharged from the fan 150 may flow upward toward the upper portion 105 and be discharged from the discharge part 106.

Referring to FIG. 14, the second suction flow of air suctioned from the second suction part 115a may pass through the heat exchanger 160 and then be suctioned into the second suction side of the fan 150.

Additionally, the air is discharged in the radial direction of the fan 150 and may flow upward through the fan discharge part 157 provided at the upper end of the fan 150.

At least some of the air that has passed through the fan 150 may flow into the guide hole 123b adjacent to the upper end portion of the fan 150. The guide hole 123b may be formed to pass through the second partition wall 123.

The second partition wall 123 may include an inlet guide 175 that guides air to flow into the guide hole 123b. The inlet guide 175 may protrude from the second partition wall 123 toward the space where the fan 150 is located.

The lower surface of the inlet guide 175 is open, and the open lower surface may form an inlet of the guide hole 123b. Air may flow into the valve device 170 provided on the partition 123 through the inlet guide 175 and the guide hole 123b.

The valve device 170 may be disposed in the guide hole 123b in a space where the dehumidification module 300 is installed. In other words, the inlet guide 175 and the valve device 170 may be disposed opposite to each other with respect to the second partition wall 123.

A supply pipe 172 is connected to the valve device 170, and the supply pipe 174 may be connected to the connection port 354 of the dehumidification module 300.

The valve device 170 is provided to be open or closed, and when the valve device 170 is opened, air passes through the valve device 170 and the supply pipe 172 and then may be supplied to the distribution plate 356 of the dehumidification module 300.

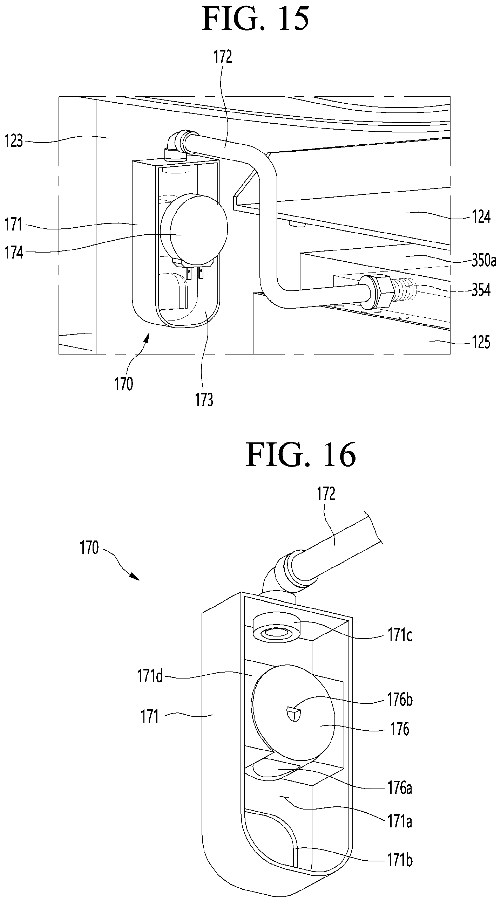

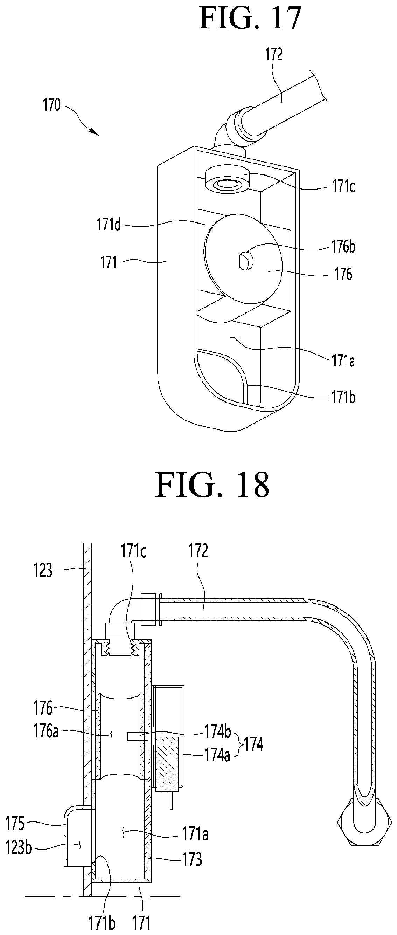

FIG. 15 is a front perspective view illustrating the configuration of a valve device according to an embodiment of the present disclosure, FIG. 16 is a front perspective view illustrating the valve cover removed with the valve device in an open state according to an embodiment of the present disclosure, FIG. 17 is a front perspective view illustrating the valve cover removed with the valve device in an closed state according to an embodiment of the present disclosure, and FIG. 18 is a cross-sectional view taken along line 18-18 of FIG. 14.

Referring to FIGS. 15 to 18, the valve device 170 may include a valve housing 171 and a valve cover 173 coupled to the valve housing 171.

The valve housing 171 may be disposed on the second partition wall 123. The valve housing 171 may be installed and fixed to the second partition wall 123. The valve housing 171 may be disposed opposite the inlet guide 175 with respect to the second partition wall 123.

The valve housing 171 may form an air flow path 171a through which air introduced through the inlet guide 175 flows. The air flow path 171a may be formed on one inner side of the valve housing 171. The air flow path 171a may be formed by coupling the valve cover 173 to the valve housing 171.

The valve housing 171 may form an inlet hole 171b communicating with the guide hole 123b. The inlet hole 171b may be understood as an inlet through which air introduced through the inlet guide 175 flows into the air flow path 171a.

The inlet hole 171b may be formed on the front surface of the valve housing 171. For example, the inlet hole 171b may be formed in the lower portion of the front surface of the valve housing 171. The inlet hole 171b may be formed at a point facing the inlet guide 175 and connected to the guide hole 123b.

The valve housing 171 may form a discharge hole 171c through which air is discharged. The discharge hole 171c may be understood as an outlet through which air introduced through the inlet guide 175 is discharged to the outside of the valve device 170.

The discharge hole 171c may be formed on the upper surface of the valve housing 171. However, it is not limited to this, and the discharge hole 171C may be formed on the side of the valve housing 171 or on the valve cover 173. The discharge hole 171c may be connected to the supply pipe 172. The discharge hole 171c may be connected to the supply pipe 172 through a connection socket.

The valve housing 171 may form a valve support part 171d that supports an valve 176. The valve support part 171d is formed as a pair and may support both sides of the valve 176. The valve support part 171d is formed on both sides of the valve housing 171 and may stably support the valve 176.

The valve device 170 may further include an valve 176 installed in the valve housing 171 to control the flow rate of air. The valve 176 is disposed on one side of an inner portion of the valve housing 171. The valve 176 may be disposed at a midpoint based on the vertical direction of the air flow path 171a.

The valve 176 may be formed in a cylindrical shape and supported on the valve support part 171d. The valve 176 is seated between a pair of valve support parts 171d and may be provided to be rotatable.

The valve 176 may form a valve flow path 176a through which air flows. The valve flow path 176a may be formed by opening a portion of the valve 176. For example, the valve flow path 176a may be formed to penetrate from one side to the other side of the valve 176. The valve flow path 176a may be selectively communicated with the air flow path 171a.

For example, as illustrated in FIG. 16, when the valve 176 rotates in the direction in which the valve flow path 176a faces the air flow path 171a, the valve 176 may open and air may flow into the valve flow path 176a.

Conversely, as illustrated in FIG. 17, when the valve 176 rotates in the direction in which the valve flow path 176a faces the valve support part 171d, the valve 176 may close and air may not flow into the valve flow path 176a.

The valve 176 may form a coupling part 176b coupled to the motor shaft 174b of the valve motor 174. The coupling part 176b may be understood as a configuration for rotating the valve 176 by the driving force generated by the valve motor 174.

The coupling part 176b may be formed on a surface facing the valve cover 173. The coupling part 176b may be formed in a portion corresponding to the center of rotation of the valve 176. The coupling part 176b may be formed by a portion of the outer surface of the valve 176 being recessed inward. Differently, the coupling part 176b may be formed so that a portion of the outer surface of the valve 176 protrudes outward.

The valve device 170 may further include a valve motor 174 that is coupled to the valve 176 and rotates the valve 176. The valve motor 174 may be disposed outside the valve device 170. The valve motor 174 may be installed on the valve cover 173.

The valve motor 174 may include a motor main body 174a that generates driving force, and a motor shaft 174b protruding from one side of the motor main body 174a. The motor main body 174a is disposed on the front surface of the valve cover 173, and the motor shaft 174b may penetrate the valve cover 173 and may be coupled to the coupling part 176b of the valve 176. Accordingly, the driving force generated by the motor main body 174a may be transmitted to the valve 176 through the motor shaft 174b to rotate the valve 176.

For example, the valve motor 174 may be configured as a step motor. The valve motor 174 may control the opening and closing amount of the valve 176 by adjusting the rotation amount (rotation angle) of the rotation shaft 174b.

When the valve 176 is opened, the air flowing into the inlet guide 175 is guided to the air flow path 171a through the inlet port 171b, and passes through the valve flow path 176a to discharge to the discharge port 171c. The air discharged through the discharge port 171c flows into the connection port 354 of the dehumidification module 300 along the supply pipe 172, and the air flowing into the connection port 354 may flow evenly toward the inner peripheral surface of the dehumidification member 320 through the plurality of distribution holes 356a of the distribution plate 356.

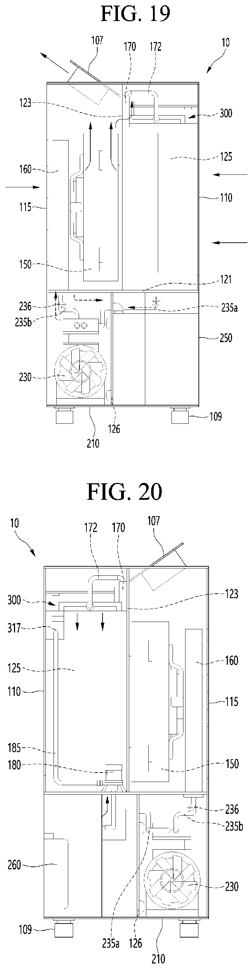

FIG. 19 is a view illustrating a state where the first suction flow and the second suction flow are suctioned and thus a discharge flow is generated in the dehumidifier according to an embodiment of the present disclosure, and FIG. 20 is a view illustrating a state where fluid is supplied from a water supply tank to a dehumidification module in a dehumidifier according to an embodiment of the present disclosure.

First, referring to FIG. 19, when the two-way suction fan 150 is driven, the first suction flow flowing into the inside of the dehumidifier 10 through the first suction part 110a and a second suction flow flowing into the interior of the dehumidifier 10 through the second suction part 115a may be generated.

The first suction flow may separate moisture (water vapor) from the air while passing through the dehumidification module 300. The air from which the moisture has been separated may be suctioned in in the axial direction through the first suction side of the fan 150, flow in the radial direction, and be discharged through the upper end of the fan 150.

The separated moisture may be discharged downward from the dehumidification module 300 and flow into the heat exchanger 160 through the connection pipe 235 and the vacuum pump 230.

The second suction flow passes through the heat exchanger 160, and in this process, moisture flowing into the heat exchanger 160 may be condensed. The air in which the moisture has been condensed is discharged from the heat exchanger 160 and may be suctioned in in the axial direction through the second suction side of the fan 150.

The second suction flow passing through the fan 150 may flow in a radial direction and be discharged through the upper end of the fan 150. The second suction flow may combine with the first suction flow, flow upward, and be discharged through the discharge part 106 of the dehumidifier 10. The discharge vane 107 may control the amount of air discharged from the discharge part 106.

At least some of the air discharged from the upper end of the fan 150 may flow into the valve device 170 through the guide hole 123b formed in the second partition wall 123. At this time, the valve device 170 may be opened, and air may be supplied to the dehumidification module 300 through the valve device 170 and the supply pipe 172.

The air supplied to the dehumidification module 300 may remove water vapor accumulated inside the dehumidification member 320.

Next, referring to FIG. 20, when the water pump 180 is driven, the water stored in the water supply tank 260 may be supplied to the dehumidification module 300 through the water supply connection pipe 185 and the water supply pump 180.

The water supplied to the dehumidification module 300 flows into the water supply duct 315 of the dehumidification module 300 and may be supplied to the surroundings of the dehumidification member 320 through the water supply hole 315a. Because water may be in contact with the surface of the dehumidification member 320 due to the suction force of the fan 150, the dehumidification member 320 may become wet, and thus the moisture separation performance in the dehumidification member 320 may be improved.

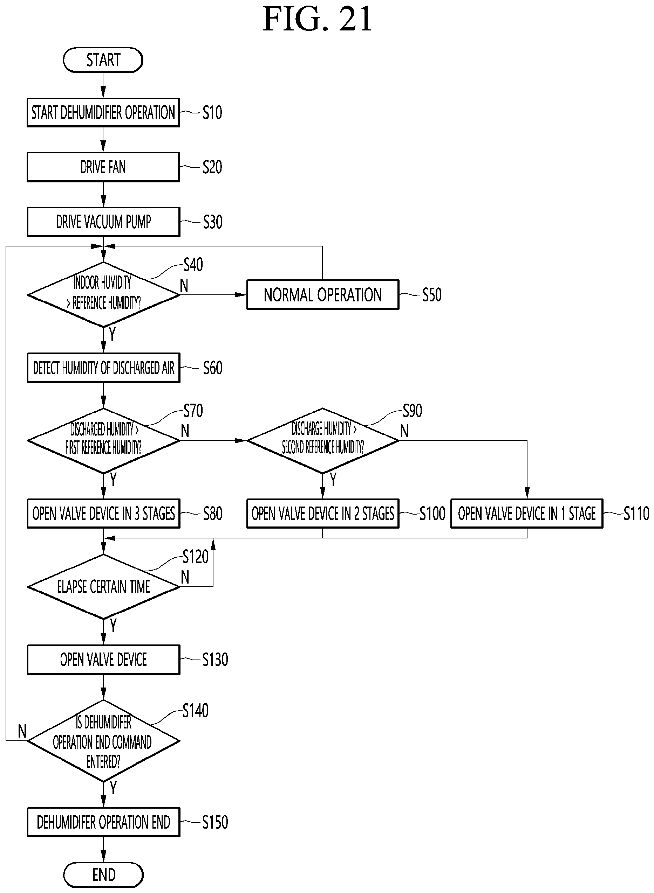

FIG. 21 is a flowchart illustrating a method for controlling a dehumidifier according to an embodiment of the present disclosure.

Referring to FIG. 21, the controller of the dehumidifier drives the fan 150 and the vacuum pump 230 when the dehumidifier starts operating.

For example, when a dehumidification operation command is input through the display part 108, the fan 150 is driven to form a first suction flow and a second suction flow, and the vacuum pump 230 is driven to apply vacuum pressure to the dehumidification module 300 (S10, S20, S30).

The dehumidifier 10 determines whether the current indoor humidity is higher than or equal to the reference humidity, and if the indoor humidity is less than the reference humidity, the dehumidifier performs the dehumidification operation normally (S40, S50).

If the indoor humidity is higher than the reference humidity, the dehumidifier 10 detects the humidity of the discharged air. For example, the dehumidifier 10 may detect the humidity of the air discharged through the discharge part 106.

Here, the reason for detecting the humidity of the discharged air is to determine the amount of water vapor accumulated on the inner wall of the dehumidification member 320.

For example, when a relatively large amount of water vapor accumulates on the inner wall of the dehumidification member 320, the dehumidification performance of the dehumidification member 320 deteriorates, so a relatively large amount of dry air is supplied to the dehumidification member 320, and thus, it is necessary to remove water vapor accumulated on the inner wall of the dehumidification member 320.

As another example, when a relatively small amount of water vapor accumulates on the inner wall of the dehumidification member 320, even if a relatively small amount of dry air is supplied to the dehumidification member 320, the water vapor accumulated on the inner wall of the dehumidification member 320 may be easily removed (S60).

If the humidity of the discharged air is higher than or equal to the first reference humidity, the dehumidifier 10 controls the valve device 170 to open in three stages (maximum open).

Here, the fact that the humidity of the discharged air is higher than or equal to the first reference humidity may be determined to mean that a relatively large amount of water vapor has accumulated on the inner wall of the dehumidification member 320. Therefore, in this case, the opening and closing amount (opening degree) of the valve device 170 is maximized to supply a relatively large amount of dry air to the dehumidification member 170 (S70, S80).

If the humidity of the discharged air is less than the first reference humidity and more than or equal to the second reference humidity, the dehumidifier 10 controls the valve device 170 to open in two stages (middle open).

The second reference humidity may be lower than the first reference humidity.

Here, if the humidity of the discharged air is less than the first reference humidity and more than or equal to the second reference humidity, it may be determined that a normal amount of water vapor has accumulated on the inner wall of the dehumidification member 320. Therefore, in this case, the opening and closing amount (opening degree) of the valve device 170 is set to the middle so that an appropriate amount of dry air is supplied to the dehumidification member 170 (S90, S100).

If the humidity of the discharged air is less than the second reference humidity, the dehumidifier 10 controls the valve device 170 to open in the first stage (minimum open).

Here, the fact that the humidity of the discharged air is less than the second reference humidity may be determined to mean that a relatively small amount of water vapor has accumulated on the inner wall of the dehumidification member 320. Therefore, in this case, the opening and closing amount (opening degree) of the valve device 170 is minimized so that a relatively small amount of dry air is supplied to the dehumidification member 170 (S110).

The air conditioner 10 determines whether a certain time has elapsed when the valve device 170 is opened, and controls the valve device 170 to turn off when the certain time has elapsed. For example, the certain time may be less than 20 seconds (S120, S130).

The dehumidifier 10 determines whether a dehumidifier operation end command is input, and ends the dehumidifier operation when the operation end command is input. If the operation end command is not input, the process returns to step S40 (S140, S150).

According to an embodiment of the present disclosure, constant temperature dehumidification may be easily implemented without increasing the temperature of the indoor space by selectively separating moisture in the air through a dehumidification module including a membrane without operating a refrigeration cycle.

According to an embodiment of the present disclosure, dehumidification may be accomplished by passing through a dehumidification module without requiring time for stabilization of the refrigeration cycle, so the dehumidification time may be shortened.

According to an embodiment of the present disclosure, separation and condensation of moisture may be easily performed by generating a first suction flow of air to remove moisture and a second suction flow of air to perform heat exchange.

According to an embodiment of the present disclosure, a two-way suction fan is provided so that the first suction flow and the second suction flow may be easily suctioned into the dehumidifier in directions facing each other.

According to an embodiment of the present disclosure, the first direction of the suction flow of air to remove moisture and the second direction of the flow of separated water vapor are configured to be perpendicular to each other, so that moisture separation performance may be improved.

According to an embodiment of the present disclosure, water vapor in the air passing through the dehumidification module may be moved into the inside of the membrane by generating a pressure difference between the inside and outside of the membrane using a vacuum pump.

According to an embodiment of the present disclosure, water vapor separated from the dehumidification module flows into a heat exchanger via a vacuum pump and exchanges heat with indoor air in the heat exchanger, making it easy to remove condensed moisture.

According to an embodiment of the present disclosure, the first part where the fan that generates air flow is disposed is disposed in the upper space of the dehumidifier, so that air suction from the indoor space may be easily achieved.

According to an embodiment of the present disclosure, a dehumidification module that separates moisture in the air is disposed in the first part, so that the separated water vapor falls in the direction of gravity, making it easy to collect water vapor and compactly constructing the piping connected to the vacuum pump.

According to an embodiment of the present disclosure, by placing the heat exchanger in the first part, the main flow of indoor air requiring dehumidification and the sub-flow for the heat exchanger may be easily generated in two directions using one fan.

According to an embodiment of the present disclosure, the first part is divided through a partition wall and a dehumidification module and a heat exchanger are disposed in the divided area, so that a main flow in which a relatively large amount of suction is performed and a sub flow in which a small amount of suction is performed may be easily generated and pressure loss may be prevented.

According to an embodiment of the present disclosure, a vacuum pump for suctioning water vapor separated from the dehumidification module is disposed in the second part, and the second part forms the lower space of the dehumidifier, so that the separated water vapor may be easily suctioned into the vacuum pump by the effect of gravity.

According to an embodiment of the present disclosure, the vacuum pump is disposed in the second part below the heat exchanger, so that high-temperature water vapor passing through the vacuum pump is quickly transferred to the heat exchanger, it is easy to block noise generated from the vacuum pump, and it may be effective in accessibility for maintenance.

According to an embodiment of the present disclosure, a drain tank storing water condensed in a heat exchanger is disposed in the second part, thereby facilitating the flow of condensed water in the direction of gravity.

According to an embodiment of the present disclosure, the water supply tank that supplies water to the dehumidification module is disposed in the second part, so that the upper space of the dehumidifier may be efficiently utilized and the user's accessibility to the water supply tank may be improved.

According to an embodiment of the present disclosure, by supplying dry air to the inside of the dehumidification module, water vapor accumulated on the inner wall of the dehumidification module can be removed and deterioration of dehumidification performance can be prevented.

According to an embodiment of the present disclosure, some of the air discharged from the fan is uniformly supplied to the inside of the dehumidification module through the distribution plate, so that water vapor accumulated on the inner wall of the dehumidification module may be quickly removed.

According to an embodiment of the present disclosure, dry air may be appropriately supplied to the dehumidification module according to indoor environmental conditions, and thus the moisture separation performance of the dehumidification module may be improved.

## Claims

1. A dehumidifier comprising:
a main body including a suction part and a fan;
a dehumidification module including a dehumidification member that separates moisture from the air suctioned from the suction part by driving the fan;
a vacuum pump configured to provide driving force to discharge moisture separated from the dehumidification module to an outside of the dehumidification module;
a valve device configured to supply at least some of the air discharged from the fan to the dehumidification module; and
a supply pipe connected to the valve device and configured to supply air that has passed through the valve device to the dehumidification module.

2. The dehumidifier of claim 1, further comprising:
a partition wall configured to separate the space in which the dehumidification module is installed and the space in which the fan is installed,
wherein the valve device is installed on the partition wall.

3. The dehumidifier of claim 2,
wherein the valve device and the supply pipe are disposed in a space in which the dehumidification module is installed.

4. The dehumidifier of claim 3, further comprising:
an inlet guide configured to guide at least some of the air discharged from the fan to the valve device,
wherein the inlet guide is installed on the partition wall.

5. The dehumidifier of claim 4,
wherein the inlet guide is disposed in a space where the fan is installed.

6. The dehumidifier of claim 4,
wherein the inlet guide is spaced apart and disposed above the fan.

7. The dehumidifier of claim 4,
wherein the inlet guide and the valve device are disposed across from each other with respect to the partition wall.

8. The dehumidifier of claim 2,
wherein the valve device includes:
a valve housing forming an air flow path therein;
a valve cover coupled to cover the open surface of the valve housing; and
a valve disposed in the air flow path to control the flow of air.

9. The dehumidifier of claim 8,
wherein the valve device further includes a motor that provides driving force to rotate the valve, and
wherein the motor is coupled to the valve cover.

10. The dehumidifier of claim 8,
wherein the valve device further includes a valve support configured to support the valve, and
wherein the valve supports are formed, respectively, on both sides of the valve housing to support both sides of the valve.

11. The dehumidifier of claim 8,
wherein an inlet hole through which air flows in and an outlet hole through which air is discharged are formed in the valve housing.

12. The dehumidifier of claim 11,
wherein a guide hole partially penetrating is formed in the partition wall, and
wherein the inlet hole communicates with the guide hole.

13. The dehumidifier of claim 11,
wherein the supply pipe is connected to the outlet hole.

14. The dehumidifier of claim 11,
wherein the front surface of the valve housing is coupled to the valve cover, and
wherein the rear surface of the valve housing is coupled to the partition wall.

15. The dehumidifier of claim 14,
wherein the inlet hole is formed in the front surface of the valve housing, and
wherein the outlet hole is formed on the upper surface of the valve housing.

## Amended claims

### Amended claims in accordance with Rule 137(2) EPC.

1. A dehumidifier comprising:
a main body (100) including a suction part (110) and a fan (150);
a dehumidification module (300) including a dehumidification member (320) that separates moisture from the air suctioned from the suction part by driving the fan (150); and
a vacuum pump (230) configured to provide driving force to discharge moisture separated from the dehumidification module (300) to an outside of the dehumidification module (300),
**characterized in that** the dehumidifier further comprises:
a valve device (170) configured to supply at least some of the air discharged from the fan (150) to the dehumidification module (300), and
a supply pipe (172) connected to the valve device (170) and configured to supply air that has passed through the valve device (170) to the dehumidification module (300).

2. The dehumidifier of claim 1, further comprising:
a partition wall (123) configured to separate the space in which the dehumidification module (300) is installed and the space in which the fan (150) is installed,
wherein the valve device (170) is installed on the partition wall (123).

3. The dehumidifier of claim 2,
wherein the valve device (170) and the supply pipe (172) are disposed in a space in which the dehumidification module (300) is installed.

4. The dehumidifier of claim 3, further comprising:
an inlet guide (175) configured to guide at least some of the air discharged from the fan (150) to the valve device (170),
wherein the inlet guide (175) is installed on the partition wall (123).

5. The dehumidifier of claim 4,
wherein the inlet guide (175) is disposed in a space where the fan (150) is installed.

6. The dehumidifier of claim 4,
wherein the inlet guide (175) is spaced apart and disposed above the fan (150).

7. The dehumidifier of claim 4,
wherein the inlet guide (175) and the valve device (170) are disposed across from each other with respect to the partition wall (123).

8. The dehumidifier of claim 2,
wherein the valve device (170) includes:
a valve housing (171) forming an air flow path therein;
a valve cover (173) coupled to cover the open surface of the valve housing (171); and
a valve (176) disposed in the air flow path to control the flow of air.

9. The dehumidifier of claim 8,
wherein the valve device (170) further includes a motor (174) that provides driving force to rotate the valve (176), and wherein the motor (174) is coupled to the valve cover (173).

10. The dehumidifier of claim 8,
wherein the valve device (170) further includes a valve support (171d) configured to support the valve (176), and
wherein the valve supports (171d) are formed, respectively, on both sides of the valve housing (171) to support both sides of the valve (176).

11. The dehumidifier of claim 8,
wherein an inlet hole (171b) through which air flows in and an outlet hole (171c) through which air is discharged are formed in the valve housing (171).

12. The dehumidifier of claim 11,
wherein a guide hole (123b) partially penetrating is formed in the partition wall (123), and
wherein the inlet hole (171b) communicates with the guide hole (123b).

13. The dehumidifier of claim 11,
wherein the supply pipe (172) is connected to the outlet hole (171c).

14. The dehumidifier of claim 11,
wherein the front surface of the valve housing (171) is coupled to the valve cover (173), and
wherein the rear surface of the valve housing (171) is coupled to the partition wall (123).

15. The dehumidifier of claim 14,
wherein the inlet hole (171b) is formed in the front surface of the valve housing (171), and
wherein the outlet hole (171c) is formed on the upper surface of the valve housing (171).
